# EUROPEAN PATENT APPLICATION

(11) **EP 0 882 954 A1**
(43) Date of publication of application: **09.12.1998**
(21) Application number: 98201496.1
(22) Date of filing: 07.05.1998
(51) Int. Cl.: G01F 15/07

(54) **Counting mechanism for a flow meter**

(30) Priority: 02.06.1997 NL 1006194
(71) Applicant: INSTROMET B.V., 7064 KA Silvolde (NL); KINETRON B.V., NL-5025 JD Tilburg (NL)
(72) Inventor: Dijstelbergen, Harmen Hein, 2910 Essen (BE); Meyer, Bernardus Johannes, 5025 KX Tilburg (NL)
(74) Representative: Morel, Christiaan F., Ir.Dr.

(57) **Abstract**

Counting mechanism for a flow meter for measuring a stream of gas or liquid, provided with a rotational shaft which is driven in rotation by the stream to be measured, for example with the aid of a paddle wheel or a rotary piston, on which rotary shaft one or more counting wheels are arranged. Each counting wheel is divided along the circumference into a number of segments, a number of sensors being placed around the circumference of each counting wheel at a distance apart which is such that each of the sensors lies opposite a different segment of the counting wheel. The sensors transmit a different signal for some of the segments than for the other segments. The positioning of the sensors and the segments is such that each position of the counting wheel gives a different combination of signals transmitted by the sensors. Some of the segments are magnetic, while the other segments are non-magnetic, and the sensors are magnetic sensors.

## Description

The invention relates to a counting mechanism for a flow meter for measuring a stream of gas or liquid, provided with a rotational shaft which is driven in rotation by the stream to be measured, for example with the aid of a paddle wheel or a rotary piston, on which rotary shaft one or more counting wheels are arranged.

Counting mechanisms of this kind are used for counting the numbers of measured units of gas or liquid, for example water or fuel. Counting mechanisms which are driven mechanically by the stream of gas or liquid to be measured are generally used for this purpose. The counting wheels are connected to one another with a suitable intermittent transmission and are each provided with the numbers '0' to '9' inclusive, which are successively positioned in front of a read-out window. When a counting wheel passes from the '9' to the '0', the position of the wheel of the next counting wheel showing a more significant figure is increased by 1.

Although most counting mechanisms are of completely mechanical design and do not require any supply voltage, it is sometimes advantageous also to have the position of the counting mechanism available in electronic form, for example if it is necessary to be able to call up the position of the counting mechanism remotely, such as at the cash desk of a petrol station. Electronic volume correction devices (EVCDs), for example, are used in the gas industry for correcting variations in the pressure and temperature of the gas. In these EVCDs, a pulse signal is derived from the rotation of a paddle wheel or rotary piston which is driven by the gas stream to be measured. These pulse signals are counted up in electronic or electromechanical counters. The counter position obtained in this way should then correspond to the position of a mechanical counter on the flow meter. If a pulse signal is missed, or if an interference pulse is registered, the two counters deviate counters deviate from one another. This difference continues to exist until it is expressly corrected or until an error having the opposite effect occurs.

In many countries, the authorities which are responsible for the supervision of weights and measures frequently demand a reliability which allows error-free transmission of a meter position to be guaranteed or monitored. It is also important, for example, in the case of petrol pumps for the counter position on the meter at the pump to correspond completely to the counter position at the cash desk.

The object of the invention is to provide a counting mechanism of the type described in the preamble in which the position of the counting wheels of the counting mechanism are converted in a clear and error-free manner into an electronic signal.

This object of the invention is achieved by the fact that each counting wheel is divided along the circumference into a number of segments, a number of sensors being placed around the circumference of each counting wheel at a distance apart which is such that each of the sensors lies opposite a different segment of the counting wheel, the sensors transmitting a different signal for some of the segments than for the other segments, the positioning of the sensors and the segments being such that each position of the counting wheel gives a different combination of signals transmitted by the sensors.

This measure allows the entire position of a mechanical counting mechanism to be read out electronically. The electronic signal is derived directly from the position of the counting wheels, so that the possibility of errors and ambiguities is reduced considerably. If the output signal from each of the sensors is converted into a '0' or a '1', the result is a different binary code for each counting-wheel position. If four sensors are used, the result is therefore a 4-bit code. Each binary code represents one figure. Due to the fact that each of the counting wheels is thus read out by sensors, every counter position can be read out electronically in a simple and accurate manner. The signals read out can be processed using the known means, interfaces and protocols, for example via an RS232 interface, modbus or HART.

Preferably, some of the segments are magnetic while the other segments are non-magnetic, and the sensors are magnetic sensors. As a result, a clear difference which can be detected by the sensors is obtained, and this difference can be converted in a simple manner into an electronic signal. Another possibility is for some of the segments to exhibit a different direction of magnetization from the other segments, in which case the sensors also comprise magnetic sensors. Extremely suitable sensors which can be obtained and used easily and at a low cost price are, for example, magnetoresistive sensors or Hall sensors.

Preferably, the signals from all the sensors are read out and processed simultaneously and in parallel, so that the position of the counting wheels does not change during the read-out.

However, in another possible preferred embodiment, the signals may be read out and processed serially for each counting wheel or for each sensor, the position of the least significant counting wheel being read out first, followed successively by the positions of the subsequent counting wheels, followed by a return to the least significant counting wheel. In order to check that no carries or other changes have occurred, it is checked that the position of the least significant counting wheel has not changed during the read-out of the other counting wheels.

When the least significant counting wheel changes from the position '9' to the position '0', the subsequent counting wheel is also moved on by one digit. If this counting wheel was also in the '9' position, the subsequent counting wheel is also advanced. During this successive change of the counting wheels, also referred to as the "carry propagation", the positions of the counting wheels are not completely defined and, depending on the tolerances in the positions of the sensors, this may lead to erroneous counter positions being read. It is therefore important that there is no read-out during the change of the counting wheels or that a marker or flag indicates that the counting position may not be entirely correct.

In order to remedy this problem, the sensors are preferably programmed in such a manner that they do not read out during the time in which the least significant counting wheel shows '0' or '9'.

In another preferred embodiment, this problem is remedied by the fact that the counting mechanism comprises an auxiliary sensor which during the change of the counting wheels, the so-called "carry period", derives an auxiliary signal from the drive of the counter. Using this auxiliary signal, the read-out signal can be corrected in a simple manner during the "carry period", so that errors are avoided.

In order to have a counter position available even during this period, in a preferred embodiment the counting mechanism comprises an electronic register which continuously follows the counter position except for during the "carry period". Then, the position of the register is read out instead of the direct counter position. This register then runs at most two units behind the position of the mechanical register. In this case, the output signals from the sensors are preferably transmitted, with the aid of a microprocessor, to the electronic register, in which case the microprocessor - depending on whether the least significant counting wheel is in the position '9' or '0' - increases the position of the electronic register by 1 or 2. As a result, the correct position of the mechanical counting mechanism is always included in the electronic register.

In another preferred embodiment, an extra wheel is provided for the least significant counting wheel, which extra wheel rotates the least significant counting wheel in steps through 36 degrees in each case. The extra wheel therefore serves to ensure that the least significant counting wheel is also rotated in steps of 36 degrees in each case, in the same way as the other counting wheels. In this case, the position of the electronic register is always identical to the position of the counting mechanism except for during the carry period. Another possibility is to use the least significant counting wheel for this purpose, instead of an extra wheel. If this counting wheel is then covered prior to the read-out, the same result is obtained, except that the number of figures on the counter is reduced by one.

Except for the least significant counting wheel, all the counting wheels are read out only outside the "carry period", i.e. in positions which are defined within the tolerances in the transmissions between the counting wheels. The least significant counting wheel runs through all the intermediate positions, except if, as described above, an upstream device, such as an extra wheel, ensures that this wheel too only moves intermittently.

In a further possible preferred embodiment of a counting mechanism according to the invention, the last counting wheel comprises a magnet which covers half of the counting wheel, in which case five or more sensors are positioned around the last counting wheel in order to read out the position of the counting wheel. As a result, only one digit read out by a sensor ever changes, so that it is impossible for there to be any ambiguity during the read-out. The fact that five or more sensors are used prevents the possibility of a certain combination of read-out digits being the same for two different figures.

The invention will now be explained in more detail with reference to the drawing, in which:
- Figure 1: shows a counting mechanism according to the invention;
- Figure 2: shows a diagrammatic side view of a counting wheel of a counting mechanism in accordance with Figure 1;
- Figure 3: shows another possible counting wheel of a counting mechanism according to the invention;
- Figures 4A-F: show a counting wheel of a third possible counting mechanism according to the invention;
- Figures 5A-B: show a counting wheel of a fourth possible embodiment of a counting mechanism according to the invention;
- Figures 6A-B: show a counting wheel of a fifth possible embodiment of a counting mechanism according to the invention.

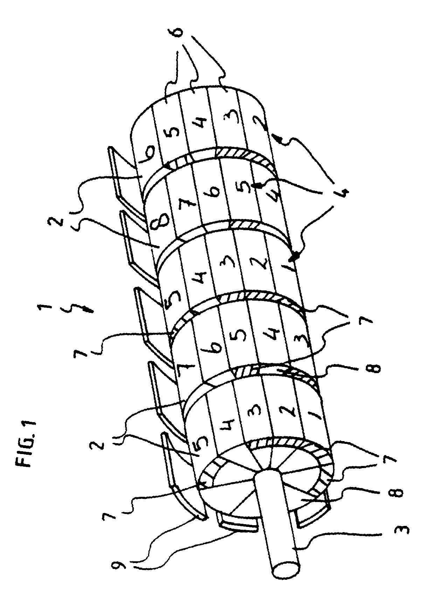

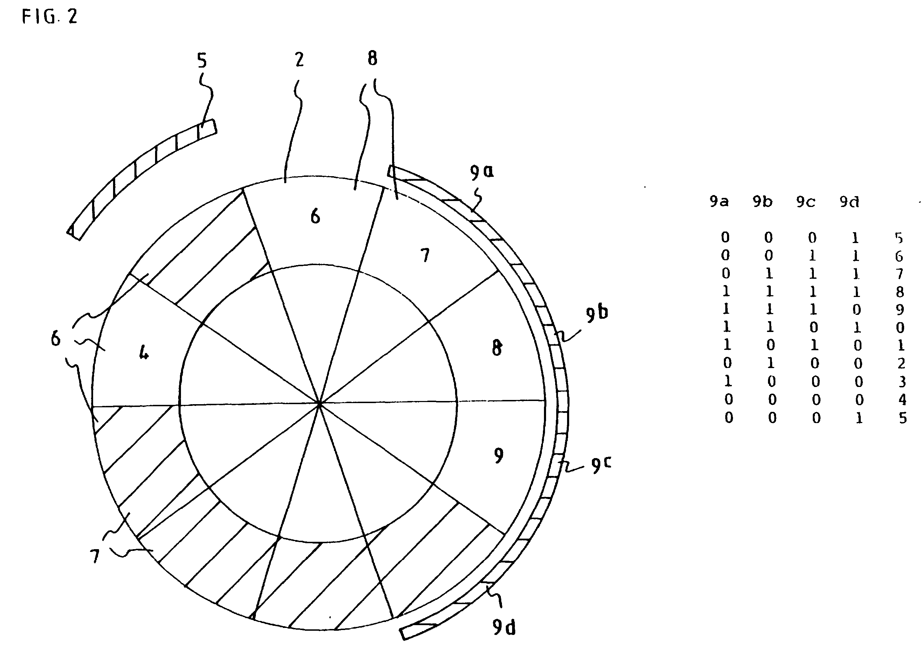

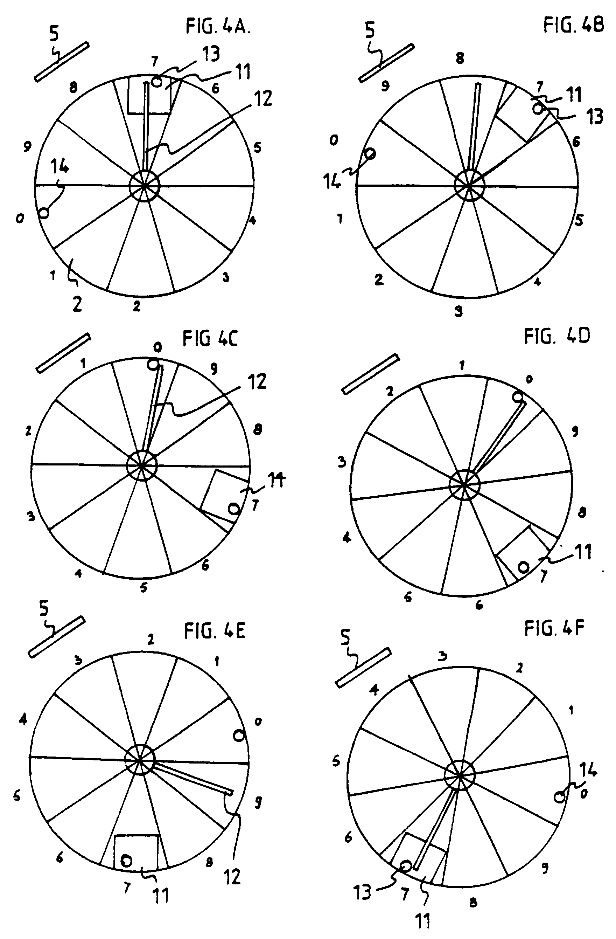

Figure 1 shows a counting mechanism 1 according to the invention for a flow meter. The counting mechanism 1 comprises a number of counting wheels 2, in this exemplary embodiment five counting wheels. The counting wheels 2 are arranged on a rotary shaft 3 and are connected to one another by an intermittent transmission which is known per se and is not shown in the drawing. The counting wheels 2 are each provided with figures 4, namely the figures '0' to '9' inclusive, which are successively placed in front of a read-out window 5 (cf. Figure 2). When a counting wheel 2 passes from the '9' to the '0', the position of the counting wheel positioned to the left of the counting wheel 2 is increased by 1. The counting wheel 2 which is situated furthest to the right and represents the least significant digit rotates gradually at a rotational speed which is proportional to the volume of gas or liquid measured. The subsequent counting wheels 2, which represent the more significant figures, rotate in steps, always through an angle of 36 degrees. Each counting wheel 2 is divided over its circumference into ten segments 6, on which the figures 4 are shown. Some of the segments 6, namely the segments 7, are magnetic, while the other segments 8 are non-magnetic. Four sensors 9 are placed at the rear of each counting wheel 2, in such a manner that each sensor 9 always lies opposite one segment 6. The sensors 9 detect whether the segment 6 is a magnetic segment 7 or a non-magnetic segment 8. Figure 2 diagrammatically shows a side view of a counting wheel 2 of the counting mechanism 1 in accordance with Figure 1. When a sensor 9 lies opposite a magnetic segment 7, it transmits a binary '1' signal, while it transmits a binary '0' signal if it lies opposite a non-magnetic segment 8. In combination, the sensors 9a, 9b, 9c and 9d transmit a binary code of four digits. This read-out code is then transmitted to and stored in an electronic register. In this exemplary embodiment, four adjacent segments are magnetic, followed by one non-magnetic segment 8, then a magnetic segment 7 and then four non-magnetic segments 8. Other patterns, for example the inverse of the pattern shown, are also possible. The four sensors 9 lie opposite four adjacent segments 6. Due to this arrangement of the sensors 9 and the segments 6, the read-out code is different for every position of the counting wheel 2. Figure 2 shows a table with the different binary codes read out in the left-hand column and the figure which is read out through the window 5 in the right-hand column when the corresponding code is read out by the sensors 9.

In this exemplary embodiment, more than one sensor will change at the same time when the counting wheel 2 rotates from '9' to '0', from '0' to '1', from '1' to '2' and from '2' to '3', as can be seen in the table. If the segments and the sensors 9 are aligned carefully, the regions where this ambiguity occurs are very small. The incorrect read-outs which may occur are either that of an existing code signal (with the result that the last decimal place is read out wrongly) or of a nonexistent code signal. In the latter case, the error can be detected, and an error message is then generated. These errors mostly occur in the last decimal place and are automatically eliminated by a slight rotation of the counting wheel 2.

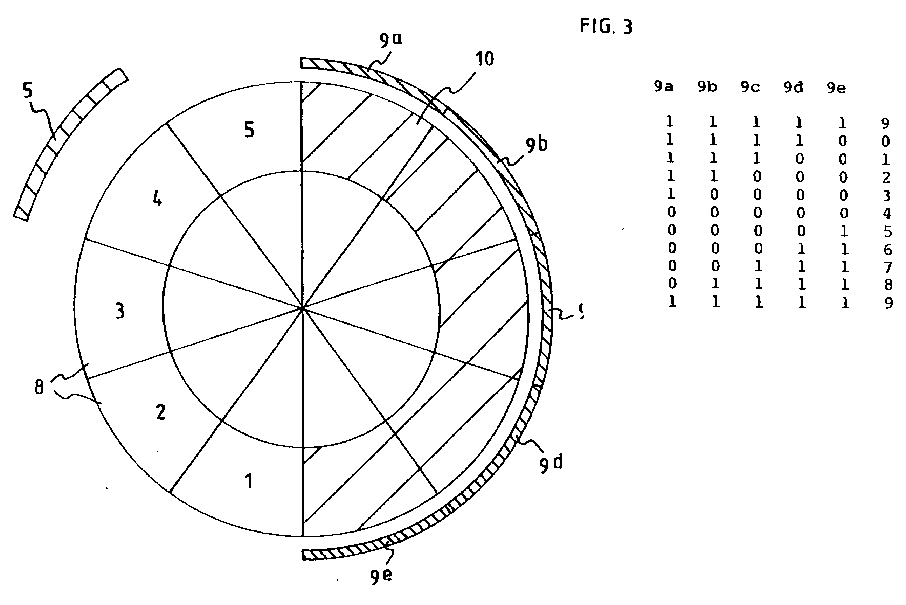

Figure 3 shows another possible counting wheel 2 which serves as the last counting wheel for the least significant decimal place of a counting mechanism according to the invention. This counting wheel 2 comprises a magnet 10 which covers half of the counting wheel 2. The counting wheel 2 is surrounded by five sensors 9a, 9b, 9c, 9d and 9e. The code table which can be read out by the sensors 9 is also shown in the figure. A different code is read out by the sensors 9 for each position, and in each case only one digit of the read-out code read out by a sensor ever changes in the event of rotation of the counting wheel.

If the counting wheel were to be surrounded by only four sensors, the code table would be as follows:

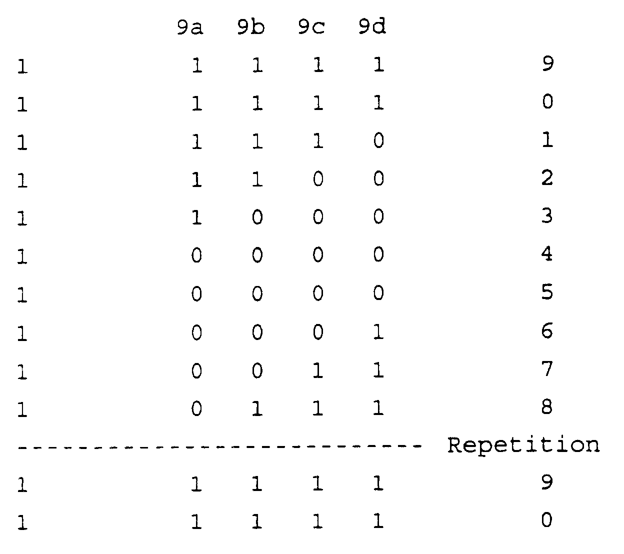

In this case, on each change only one bit is altered in the second column. However, there are two locations where successive figures have the same code, namely at the transition from '9' to '0' and at the transition from '4' to '5'. At the transition from '9' to '0', the position of the counting mechanism 1 is not transmitted to the electronic register, but rather the last valid position of the register is read out when the counter position is requested. If, in this case, the position of the memory is transmitted when the counter position is requested, with a '9' being added for the least significant digit, the maximum error is equal to one unit. When the least significant counting wheel is on '4' or '5', it will be necessary to transmit either a '4' or a '5'. Here too, the maximum error is equal to one unit. In order to prevent erroneous reproductions of this nature, five sensors are preferably used for a counting wheel of this kind, as illustrated in Figure 3.

Figures 4A to 4F inclusive show an embodiment of a counting wheel 2 in which it is possible to ensure mechanically that the situation during the transition from the '9' to the '0', referred to as the "carry period", is not stable. The counting wheel 2 comprises a weight 11 and is driven by a pin 12 which is driven by a shaft which is in line with the axis of rotation 3 of the counting wheel 2. The counting wheel 2 also comprises a first stop 13 as an axial extension to the segment which shows the figure '7', and a second stop 14 as an axial extension of the segment which shows the figure '0'. With respect to the counting wheel 2, the pin 12 can only move between these two stops 13, 14, past the segments 6 which show the figures '8' and '9'. The pin 12 rests either against the first stop 13 of the counting wheel or against the second stop 14. The weight 11 is mounted at a suitable location, in this exemplary embodiment at the location of the first stop 13. In Figure 4A, the counting wheel 2 is in the '8' position, that is to say that the '8' is read out from behind the read-out window 5. The pin 12 is vertically upright and is still resting just against the stop 13. When the counting wheel 2 rotates on into the '9' position (cf. Figure 4B), the counting wheel 2 is then rotated onwards by the weight 11 into the '1' position, as illustrated in Figure 4C, the second stop 14 then resting against the pin 12. The pin 12 always rotates with a uniform angular velocity. Owing to the weight 11, the stop 14 continues to rest against the pin 12 (cf. Figure 4F) until the weight 11 is situated at the lowest point, as illustrated in Figure 4E. The counting wheel then remains in the '3' position until the pin 12 is rotated from the stop 14 towards the first stop 13, after which the pin 12 again drives the counting wheel 2 via the first stop 13 and rotates it further. During the time in which the least significant counting wheel is moving from '1' to '8', potential energy is accumulated by lifting the weight 11 upwards. The "carry" takes place by discharging this potential energy so as to execute the "carry".

This has the advantage that if the counter cannot be read out owing to the occurrence of a "carry", it is merely necessary to wait until a read-out can be effected. It is not in this way possible to counteract the situation, in the event of a stationary or very slowly moving counter, in which the counter can never be read out. However, this is possible using the above-described embodiment of Figure 1, in particular if the stream ceases while the last counting wheel is at '0' or '9' and the counter is at a standstill.

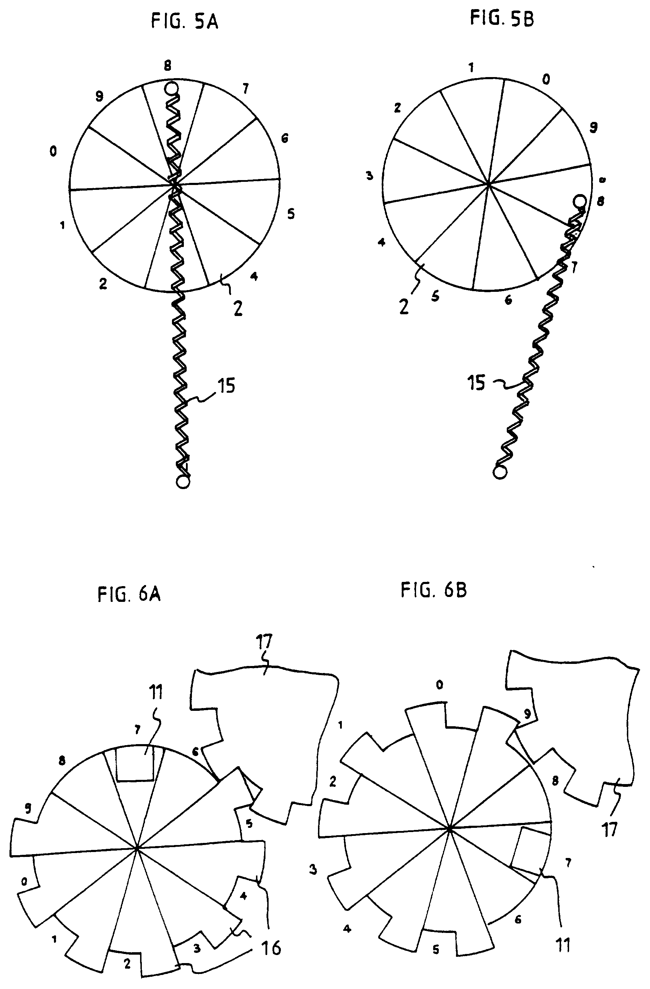

Figures 5A and 5B show an embodiment in which a spring 15 is used as the energy source instead of the force of gravity. In Figure 5A, the spring is virtually completely tensioned. In the position shown in Figure 5B, the spring is relieved again after the counting wheel has been rotated two decimal units onwards by the spring force.

Figures 6A and 6B show an embodiment in which the counting wheel 2 is provided with teeth 16 and is driven by means of a gearwheel 17. By omitting a number of teeth on the counting wheel 2 and arranging a weight 11 at the correct position, it is possible to achieve the same effect as in the embodiment shown in Figures 4A-F.

## Claims

1. Counting mechanism for a flow meter for measuring a stream of gas or liquid, provided with a rotational shaft which is driven in rotation by the stream to be measured, for example with the aid of a paddle wheel or a rotary piston, on which rotary shaft one or more counting wheels are arranged, characterized in that each counting wheel is divided along the circumference into a number of segments, a number of sensors being placed around the circumference of each counting wheel at a distance apart which is such that each of the sensors lies opposite a different segment of the counting wheel, the sensors transmitting a different signal for some of the segments than for the other segments, the positioning of the sensors and the segments being such that each position of the counting wheel gives a different combination of signals transmitted by the sensors.

2. Counting mechanism according to Claim 1, characterized in that some of the segments are magnetic while the other segments are non-magnetic, and in that the sensors are magnetic sensors.

3. Counting mechanism according to Claim 1, characterized in that some of the segments exhibit a different direction of magnetization from the other segments.

4. Counting mechanism according to Claim 2 or 3, characterized in that the sensors comprise magnetoresistive sensors or Hall sensors.

5. Counting mechanism according to one of Claims 1 to 4, characterized in that the signals from all the sensors are read out and processed simultaneously and in parallel.

6. Counting mechanism according to one of Claims 1 to 4, characterized in that the signals are read out and processed serially for each counting wheel or for each sensor, the position of the least significant counting wheel being read out first, followed successively by the positions of the subsequent counting wheels, followed by a return to the least significant counting wheel, in which case the position of the least significant counting wheel does not change when the other counting wheels are read out.

7. Counting mechanism according to one of the preceding claims, characterized in that the sensors are programmed in such a manner that they do not read out during the time in which the least significant counting wheel shows '0' or '9'.

8. Counting mechanism according to one of the preceding Claims 1 to 6, characterized in that the counting mechanism comprises an auxiliary sensor which during the change of the counting wheels, the so-called "carry period", derives an auxiliary signal from the drive of the counter.

9. Counting mechanism according to one of the preceding claims, characterized in that the counting mechanism comprises an electronic register which continuously follows the counter position except for during the "carry period".

10. Counting mechanism according to Claim 9, characterized in that the output signals from the sensors are transmitted, with the aid of a microprocessor, to the electronic register, in which case the microprocessor, depending on whether the least significant counting wheel is in the position '9' or '0', increases the position of the electronic register by 1 or 2.

11. Counting mechanism according to one of the preceding claims, characterized in that an extra wheel is provided for the least significant counting wheel, which extra wheel rotates the least significant counting wheel in steps through 36 degrees in each case.

12. Counting mechanism according to one of the preceding claims, characterized in that the last counting wheel comprises a magnet which covers half of the counting wheel, in which case five or more sensors are positioned around the last counting wheel in order to read out the position of the counting wheel.
